# EUROPEAN PATENT APPLICATION

(11) **EP 1 320 167 A1**
(43) Date of publication of application: **18.06.2003**
(21) Application number: 01830762.9
(22) Date of filing: 13.12.2001
(51) Int. Cl.: H02J 1/10

(54) **Current-sharing modular supply method and circuit**

(71) Applicant: Magnetek S.p.A., 52028 Terranuova Bracciolini (Arezzo) (IT)
(72) Inventor: Canova, Antonio, 52025 Montevarchi, Arezzo (IT); Kim, Minho, 52031 Anghiari, Arezzo (IT)
(74) Representative: Mannucci, Michele

(57) **Abstract**

The circuit comprises a plurality of supply modules for delivering current to a common load. Each supply module (3) is equipped with a driving circuit (23, 25, 27) for controlling the current delivered by the module. The supply modules are connected together by a share bus (9) on which a signal is present for balancing the current delivered by each supply module, in such a way as to control and reduce the difference between the current delivered by a dominant supply module and the current delivered by the remaining supply modules of the circuit. Associated to each supply module are means (31) for generating a PWM signal, the duration of which is proportional to the current delivered by the respective supply module. In addition, each supply module is connected to the share bus in such a way that on the latter there is present a digital share signal, which is a function of the digital PWM signal generated by the dominant supply module. In each supply module, means are provided for generating an error signal, the said means generating, on the basis of the PWM signal of the module itself and on the basis of the digital share signal, an error signal, which constitutes a feedback signal for the driving circuit of the supply module.

## Description

### Technical field

The present invention relates to a supply circuit and more in particular a current-sharing supply circuit, in which a plurality of power supplies or power-supply modules are connected to the same load, and each of which supplies to the load one part of the total current absorbed by the load itself. The invention specifically regards a circuit that enables balancing or equalizing of the currents delivered by the individual power-supply modules to the load in such a way that each one of these modules delivers substantially the same current, or, in any case, in such a way that the currents delivered by the various modules vary within acceptable limits.

The invention also relates to a method for the control of a system comprising a plurality of current-sharing power-supply modules connected to a single load.

### State of the art

It is known from the prior art that it is frequently advantageous to have available a plurality of power-supply modules in parallel for supplying one and the same load. Each power-supply module delivers one part of the total current absorbed by the load. Power-supply systems of this type, which are referred to as "current-sharing supply systems", are commonly used, for example, whenever it is necessary to have available a modular system in which it is possible to increase the total current that can be delivered as the system grows in size and/or when it is necessary to have available a redundant system, i.e., one that is able to supply the load even when one or more of the power-supply modules fail.

Typical applications of current-sharing systems are found in the telecommunications sector, where the amount of current to be delivered may rise with the gradual increase in traffic (for example, with the increase in the number of users connected to a fixed or mobile telephone network). The modularity of the power-supply system makes it possible to increase the power without replacing the power supplies, but by simply adding new modules.

In these applications, it is also important for the system to be redundant, and hence for the failure of one or more power-supplies not to interrupt supply to the load. Current sharing enables (by oversizing the total number of modules with respect to the maximum power that can be absorbed by the load) a redundant system to be obtained.

Current sharing also enables supply of very big loads with power-supply modules of small power and hence more economical.

One of the problems that arise in these systems is represented by the need to maintain approximately uniform operating conditions for the various supply modules; i.e., it is important that the supply modules should all deliver approximately the same current. An unbalancing of the system, with a module that tends to deliver a current that is substantially higher than the current supplied by the other modules engenders considerable problems. In the first place, the module that delivers the higher current has a lower life and hence tends to fail more rapidly. In addition, a lack of homogeneity in the conditions of current delivery between the individual power-supply modules leads to an unhomogeneous heating inside the cabinets in which the power supplies are housed, with consequent problems of cooling.

As a result, systems have been studied for controlling the conditions of operation of the individual power-supply modules. Control systems for this purpose are described, for instance, in US-A-5 594 286 and US-A-4 924 170.

Normally, in order to guarantee balancing between the various power-supply modules of a current-sharing system, a share bus is provided, to which the individual power-supply modules are connected. On the share bus an analog signal is present, which is proportional to the intensity of current delivered by the particular power-supply module that is instantaneously delivering the maximum current. This module is defined in the art as "dominant supply module", and in the present context this definition will be used hereinafter. The analog signal is supplied to each power-supply module. According to the analog signal on the share bus and according to an analog signal that is proportional to the current delivered by the individual module, in each power-supply module an error signal is generated, which is proportional to the difference between the current delivered by the dominant module (known via the analog signal on the share bus) and the current delivered by the individual power-supply module. This error signal constitutes a feedback signal which intervenes in the control loop of the driving circuit of the power-supply module to increase the output voltage, and hence the output current.

The main drawback of these control systems lies in the fact that the analog signal on the share bus is sensitive to electromagnetic noise. The latter is the greater, the greater is the number of power-supply modules connected to the share bus. Frequently, situations arise in which, on account of electromagnetic noise, the signal on the share bus is no longer significant, and hence is of no use in balancing the individual power-supply modules.

### Object and summary of the invention

The purpose of the present invention is to provide a circuit and control method for current-sharing supply systems, which will overcome the drawbacks referred to above.

This and further purposes and advantages, which will emerge clearly to persons skilled in the art from the ensuing text, are obtained substantially by a circuit for balancing the load currents delivered by a plurality of current-supply modules to a common load, in which each power-supply module is equipped with a driving circuit for controlling the current delivered by said module, and the supply modules are connected together by a share bus on which a signal is present for balancing the current delivered by each supply module in such a way as to control and reduce the difference between the current delivered by a dominant supply module and the current delivered by the remaining supply modules of the circuit, characterized in that:
- associated to each supply module are means for generating a digital pulse-width modulation signal (herein after also shortly indicated as digital PWM (= Pulse Width Modulation) signal), the pulse duration, or pulse width, of which is proportional to the current delivered by the respective supply module;
- each supply module is connected to the share bus in such a way that there is present on said share bus a digital share signal, which is a function of the digital pulse-width modulation signal generated by the dominant supply module; and
- in each supply module, the digital pulse-width modulation signal of the module in question and the digital share signal generate an error signal that is a function of the difference between the current delivered by the supply module itself and the current delivered by the dominant supply module, said error signal constituting a feedback signal for the driving circuit of the supply module.

The digital pulse-width modulation signal of each module can be obtained in various ways, for instance via a specific hardware circuit or via a software control by means of a microprocessor.

According to a particularly advantageous embodiment of the circuit according to the invention, the means for generating a digital pulse-width modulation signal in each supply module comprise a ramp generator, and the ramp generators of said supply modules are synchronized with one another by means of a synchronization signal on the share bus, and namely by means of the said digital share signal. In this way, a single connection bus (the share bus) between the various modules is sufficient, without it being necessary to resort to a sync signal sent on a separate bus.

Connection to the share bus may be obtained by means of an electronic switch, an opto-electronic coupler, a diode, or in any other suitable way. In general, the connection is such that the digital share signal is the inverse of the digital pulse-width modulation signal generated by the dominant supply module.

According to a practical embodiment of the invention, the following is envisaged:
- associated to each supply module is a ramp generator, the output of which is applied to an input of a respective comparator, there being applied to the second input of the comparator a signal that is proportional to the current delivered by the supply module;
- each comparator associated to each supply module generates said digital pulse-width modulation signal (PWM), which is a function of the current delivered by the respective supplied module;
- the outputs of the comparators are applied, directly or indirectly, to said share bus in such a way that there is present, on the share bus, a signal that is a function of the output of the comparator of the dominant module; and
- in each supply module, the digital share signal and the digital pulse-width modulation signal generated by the respective comparators generate an error signal that is proportional to the difference between the current delivered by the supply module to which the comparator belongs and the current delivered by the dominant supply module, said error signal being used in the driving circuit of the supply module for increasing the current delivered by said module.

Further advantageous characteristics and embodiments of the circuit according to the invention are specified in the attached dependent claims.

According to the invention, also a method is provided for controlling the current delivered by a plurality of supply modules which are connected to a common load and each of which is equipped with a driving circuit for controlling the current delivered by said module, in which on a share bus joining said supply modules there is applied a signal that is proportional to the current delivered by a dominant supply module, the dominant supply module being the supply module that instantaneously delivers the highest current, said signal on the share bus being used by each supply module to correct the current delivered. Characteristically, the invention envisages:
- generating, for each supply module, a digital pulse-width modulation signal (PWM signal) that is a function of the current delivered by the respective supply module;
- applying, on the share bus, a digital pulse-width modulation share signal determined by the current delivered by the dominant supply module;
- comparing the digital share signal with the pulse-width modulation signal generated by each supply module; and
- generating, for each supply module, an error signal that is a function of the digital pulse-width modulation signal of the respective module and of the digital share signal, and hence a function of the difference between the current delivered by the supply module in question and the current delivered by the dominant supply module. The error signal constitutes a feedback signal for the driving circuit of the respective supply module.

Further advantageous characteristics and embodiments of the method according to the invention are specified in the dependent claims.

### Brief description of the drawings

The invention will be better understood from the ensuing description and the attached drawings, which shows a practical non-limiting embodiment of the invention. More in particular, in the drawings:
Fig. 1 shows a diagram of a current-sharing supply system, with a load and a series of supply modules;
Fig. 2 shows a circuit diagram of the individual supply module;
Fig. 3 shows a circuit diagram of the ramp generator of the circuit of Fig. 2;
Figs. 4(a) to 4(f) illustrate the waveforms of the signals for control of current sharing;
Figs. 5 and 6 show circuit diagrams of two alternative embodiments of the supply module;
Fig. 7 shows an embodiment similar to the embodiment of Fig. 2, with a non-inverting logic;
Figs. 8(a) to 8(e) show the waveforms of the signals for the control of current sharing in the example of embodiment illustrated in Fig. 7;
Fig. 9 shows a diagram of embodiment of the ramp-generator circuit for the circuit solution illustrated in Fig. 8; and
Fig. 10 shows a further embodiment which employs a microprocessor.

### Description of the preferred embodiment

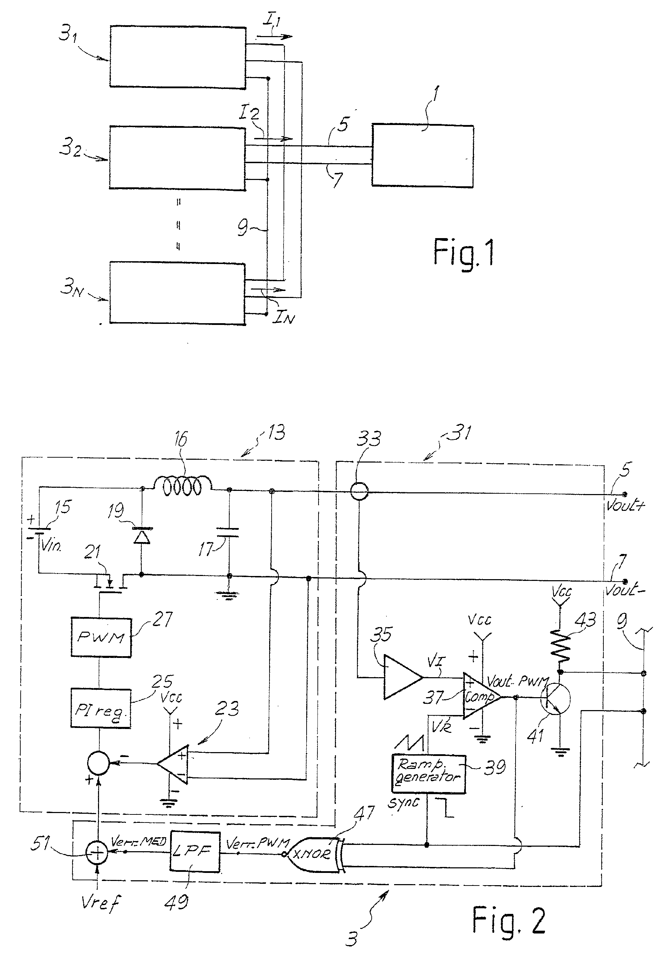

Fig. 1 is a schematic representation of a current-sharing supply system. The reference number 1 designates a load that is supplied in parallel by a series of supply modules or power supplies, designated by 3₁, 3₂, ... 3_{N}. Each power supply 3₁, 3₂, ... 3_{N} has two poles (a positive pole and a negative pole) for connection to the supply line 5, 7 of the load 1, so that the individual modules supply the load 1 in parallel. In addition to the connection with the supply line 5, 7, each supply module is connected to a share bus 9, which may consist of a single wire.

Each supply module supplies a current I₁, I₂, ... I_{N} to the load. The sum of the currents delivered by the individual modules is equal to the total current I absorbed by the load 1. Present on the share bus 9 is a signal that is a function of the current delivered by the dominant supply module, i.e., by the supply module that is instantaneously delivering the largest current. This signal, which in the present context is referred to as "digital share signal", is generated in the way described in detail in what follows. On the basis of this signal each supply module (with the exception of the dominant supply module) will modify its own operating conditions to increase the current delivered, tending to balance the system, i.e., to bring it into conditions such that the various supply modules basically all deliver the same current. It is clear that by increasing the current delivered by the supply modules other than the dominant module there will be a consequent reduction in the current delivered by the dominant supply module.

The various supply modules 3 are basically the same as one another, and Fig. 2 is a schematic illustration of a possible embodiment of one of them. The reference number 13 designates, as a whole, the DC/DC converter of the supply module. The converter 13 is connected to a dc voltage source 15 and to the line 5, 7 for connection to the load. By Vout+ and Vout- are indicated the voltages on the two poles for connection to the load. The converter is schematically represented as a device comprising an inductor 16, a levelling capacitor 17, a diode 19, and an electronic switch 21, opening and closing of which enables adjustment of the output voltage of the converter. The converter further comprises a feedback branch, designated as a whole by 23, for controlling the output voltage. The feedback branch reads the output voltage from the DC/DC converter 13 and issues a feedback signal, which is added to a reference voltage V_{ref} of a regulation block 25 (for example, a proportional-integral, or PI, regulator), connected to a PWM circuit, designated by 27, which drives switching of the electronic switch 21. Irrespective of the error signal, which is generated in the way described hereinafter according to the signal present on the share bus, the feedback branch 23 controls the DC/DC converter in such a way as to maintain the output voltage constant by means of the driving circuit that comprises the voltage regulator 25 and the PWM circuit 27.

The configuration of the DC/DC converter 13 and of the driving circuit with the corresponding feedback branch 23 is purely indicative, in so far as the invention may be applied to different configurations of the converter, as will be evident to persons skilled in the art.

The reference number 31 designates, as a whole, the control circuit for controlling the current delivered by the supply module 3. This circuit comprises a current sensor (for example, a resistor), designated as a whole by 33, which reads the current delivered by the supply module to the line 5, 7 for connection to the load 1. From this reading, via an operational amplifier 35, an analog voltage signal V, is generated. The voltage V, is proportional to the current delivered by the supply module 3. This analog voltage signal (which in traditional systems would be applied via a diode directly to the share bus 9) is applied to an input of a comparator 37, to the second input of which is applied a ramp signal V_{R} generated by a ramp generator 39.

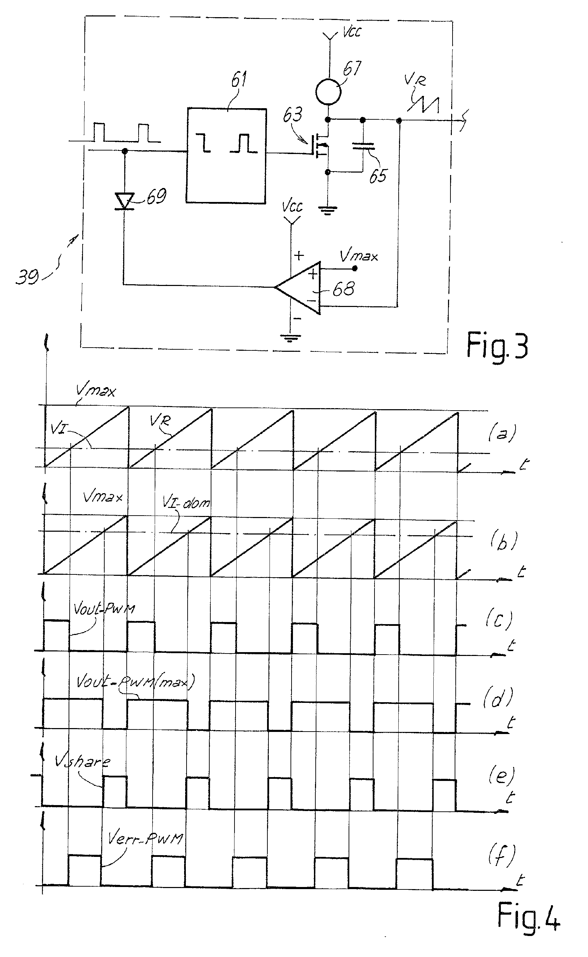

The ramp signals applied to each comparator of the individual supply modules are synchronized together via the circuit illustrated in Fig. 3 and described in what follows.

The output of the comparator 37, designated by V_{out_PWM} is a digital pulse-width modulation signal (PWM signal). The duration of the signal is proportional to the current delivered by the supply module. This digital pulse-width modulation signal is applied to the base of a transistor 41, the emitter of which is connected to ground and the collector of which is connected to a dc voltage Vcc through a resistor 43 and to the share bus 9. When the signal on the base of the transistor 41 is low, the transistor is inhibited, and hence the collector is at the voltage Vcc. Instead, when the signal on the base of the transistor 41 is high, the transistor is conducting, and the collector voltage is zero. In other words, on the collector of the transistor 41 there is a signal that is the inverse of the digital PWM signal V_{out_PWM} at output from the comparator 37.

Since all the supply modules are connected to the share bus 9 in the same way, i.e., by means of a transistor 41 driven by the output signal of the corresponding comparator 37, on the share bus 9 there will be a low signal whenever at least one of the transistors 41 is conducting, i.e., whenever at least for one of the supply modules the voltage V_{I} is higher than the voltage of the corresponding ramp signal V_{R}. Consequently, the digital share signal Vₛₕₐᵣₑ on the share bus 9 will always be low, except when the voltage signal V_{I} corresponding to the dominant supply module is higher than the ramp signal VR.

The control circuit 31 further comprises an exclusive NOR logic gate (XNOR gate), designated by 47, the inputs of which are connected to the share bus 9 and to the output of the comparator 37. Consequently, on the logic gate 47 there will be present the digital pulse-width modulation signal i.e. a PWM signal (V_{out_PWM}) of the supply module to which the gate itself belongs, as well as the digital share signal Vₛₕₐᵣₑ.

The output of the logic gate 47 is filtered by a low-pass filter 49, and the output of the filter 49, which constitutes the error signal, is added to a reference voltage V_{ref} in an adder 51. The resulting signal is a feedback signal that is sent to the regulator 25.

Operation of this circuit is described in what follows with reference to Figs. 4(a) to 4(f) and to a system that comprises just two supply modules, the extension to a system with any number n of supply modules being immediate.

When each of the supply modules delivers current to the load 1, from the amplifier 35 the analog signal V_{I}, which is proportional to the current delivered, is generated. The signal V_{I} is compared with the ramp signal V_{R} in the comparator 37. Figs 4(a) to 4(c) illustrate, respectively, the waveforms of the input signals to the comparator 37 of one of the two supply modules considered and of the corresponding output signal. The PWM signal at output from the comparator, designated by V_{out_PWM} is high as long as Vₗ is higher than the voltage of the ramp signal V_{R}. When V_{I}<V_{R}, the output signal of the comparator goes low.

Figs 4(b) and 4(d) present the waveforms of the same signals for the second supply module. In the example illustrated, the current delivered by the second supply module is greater than the current delivered by the first supply module. Consequently, the second supply module is the dominant supply module of the system. The input signal to the comparator is designated, in this case, by V_{I_max} to mean that this is (between the two output signals from the two amplifiers 35) the greater analog signal. The digital pulse-width modulation signal at output from the comparator is designated by V_{out_PWM(max)}. This is high for a time interval greater than the signal V_{out_PWM} in so far as the voltage at output from the corresponding amplifier 35 is higher than that of the first supply module.

The two signals V_{out_PWM} and V_{out_PWM(max)} are used for driving the two transistors 41, and consequently on the share bus 9 there will be a digital share signal, designated by Vₛₕₐᵣₑ, the waveform of which is represented in Fig. 4(e). The signal Vₛₕₐᵣₑ is the inverse of the signal V_{out_PWM(max)} in so far as the share bus will be isolated from ground (zero potential) only when both of the transistors 41 are open and hence only in the time interval of inhibition of the transistor 41 belonging to the dominant supply module.

In each supply module the digital share signal Vₛₕₐᵣₑ and the digital pulse-width modulation signal of the same module (V_{out_PWM}) are applied to the inputs of the XNOR gate 47. This gate is characterized by the property that the output is in the low state (logic value 0) when either only the first input or only the second input is in the high state (logic value 1), and is in the high state (1) when both of the inputs are at the same time in the low state (0) or at the same time in the high state (1). This is therefore defined by the following truth table:

| **A** | **B** | **Y** |
|---|---|---|
| 0 | 0 | 1 |
| 0 | 1 | 0 |
| 1 | 0 | 0 |
| 1 | 1 | 1 |

Consequently, in the dominant supply module, since the two signals applied to the inputs of the logic gate 47 are each the inverse of the other, the output of the logic gate will always be zero. Vice versa, in the other supply module, which delivers a lower current, at output from the logic gate 47 there will be a pulse-width modulation error signal (PWM signal), designated by V_{err_PWM}, the waveform of which is represented in Fig. 4(f). In each time interval of duration of a ramp, the signal is high for the whole time during which the current delivered by the supply module in question is lower than the current delivered by the dominant supply module. By averaging the signal V_{err_PWM} by means of the low-pass filter 49, an average error signal V_{err_MED} is obtained which is substantially constant and the level of which is proportional to the duration of the signal V_{err_MED}, and hence to the difference between the current delivered by the dominant supply module and the current delivered by the supply module to which the error signal refers. The lower the current delivered by the non-dominant supply module compared to the current delivered by the dominant module, the longer will be the time during which the signal V_{err_PWM} is high, and hence the greater will be the signal V_{err_MED}, on the basis of which there is feedback of the driving of the non-dominant supply module, which will thus tend to increase the voltage, and consequently the output current.

What has been described above for a two-supply-module system obviously may be extended to a system with n supply modules, where in each module an error signal V_{err_MED} will be generated with the same modalities described above.

In order to obtain synchronization of all the ramp signals V_{R} of the various supply modules, it is in principle possible to use a syncrhonization bus which connects the modules to a single ramp generator. However, this increases the complexity of the circuit and the wiring. It is therefore advisable to synchronize the ramp generators 39 of the various supply modules, exploiting the same digital share signal present on the share bus 9. For this purpose, the circuit illustrated in Fig. 3 may be used.

The circuit comprises a monostable multivibrator 61, to the input of which is applied the digital share signal arriving from the share bus 9. The output of the monostable multivibrator 61 is connected to the base of a transistor 63 which functions as a switch set in parallel with a capacitor 65. The capacitor 65 is connected by one plate to a current supply 67, whilst the other plate is connected to ground. When the transistor 63 is conducting, the capacitor 65 discharges, whereas when the transistor 63 is open, the capacitor charges, with a time constant defined by the characteristics of the circuit, by means of the current delivered by the source 67. The voltage between the plates of the capacitor 65 constitutes the ramp signal V_{R}.

The trigger signal of the monostable multivibrator 61 is represented by the trailing edge of the digital share signal on the share bus 9. Consequently, whenever a digital share signal Vₛₕₐᵣₑ switches from the high state to the low state, the monostable multivibrator issues a signal which sends the transistor 63 into conduction. The duration of the output signal of the monostable multivibrator 61 is sufficient for discharging the capacitor 65 completely. When the output of the monostable multivibrator 61 returns to zero, charging of the capacitor 65 starts. From a comparison between Figs. 4(a), 4(b) and 4(e), it may be noted that in effect the ramp starts at each trailing edge of the signal Vₛₕₐᵣₑ, the time required for discharging of the capacitor having been neglected in this representation.

The ramp-generator circuit 39 further comprises a connection branch between the output of the ramp signal and the input of the monostable multivibrator 61. On this branch there are set in series a comparator 68 and a diode 69. Applied to the negative input of the comparator 68 is the ramp signal V_{R}, whilst applied to the positive input is a pre-set voltage Vₘₐₓ. The voltage Vₘₐₓ represents the maximum value which the ramp signal V_{R} can reach. Normally, the output of the comparator 68 is high (V_{R}<Vₘₐₓ). If, in the absence of a trailing edge of the digital share signal, the voltage V_{R} reaches the value Vₘₐₓ, the output of the comparator 68 goes low and sends the diode 69 into conduction, with a consequent generation of a trailing edge on the signal at input to the monostable multivibrator 61.

The possible lack of synchronization between the ramps generated by the various circuits of the individual modules is corrected by the ramp-generator circuit 39 described above. Synchronization is obtained without any need for a dedicated connection between the various modules, but through the same signal on the share bus.

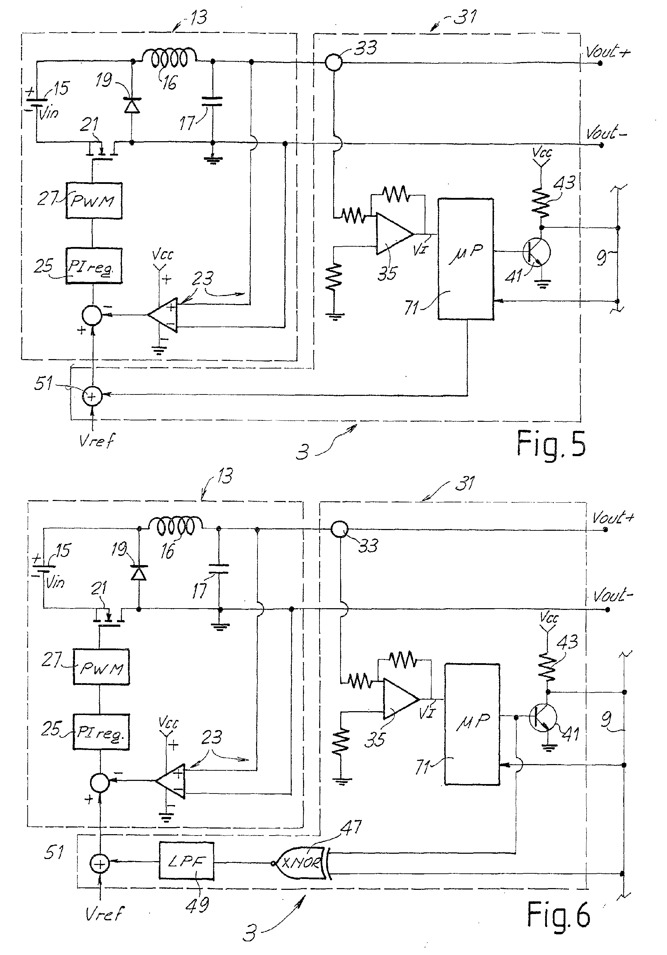

The functions performed by the control circuit 31 described with reference to Fig. 2 and by the ramp-generator circuit 39 described with reference to Fig. 3 may be entirely or partially performed via software by means of an appropriately programmed microprocessor. Fig. 5 shows en embodiment in which all the functions are performed via software by means of a microprocessor 71, which receives at input the signal V_{I} and the signal Vₛₕₐᵣₑ. The remaining parts of the circuit are designated by reference numbers that are the same as those of the corresponding parts of the circuit of Fig. 2.

Fig. 6 illustrates an intermediate solution in which only some of the functions are performed via software by means of a microprocessor 71. The other components of the circuit are designated by reference numbers that are the same as those adopted for components that are the same as or equivalent to the components of the circuit of Fig. 2.

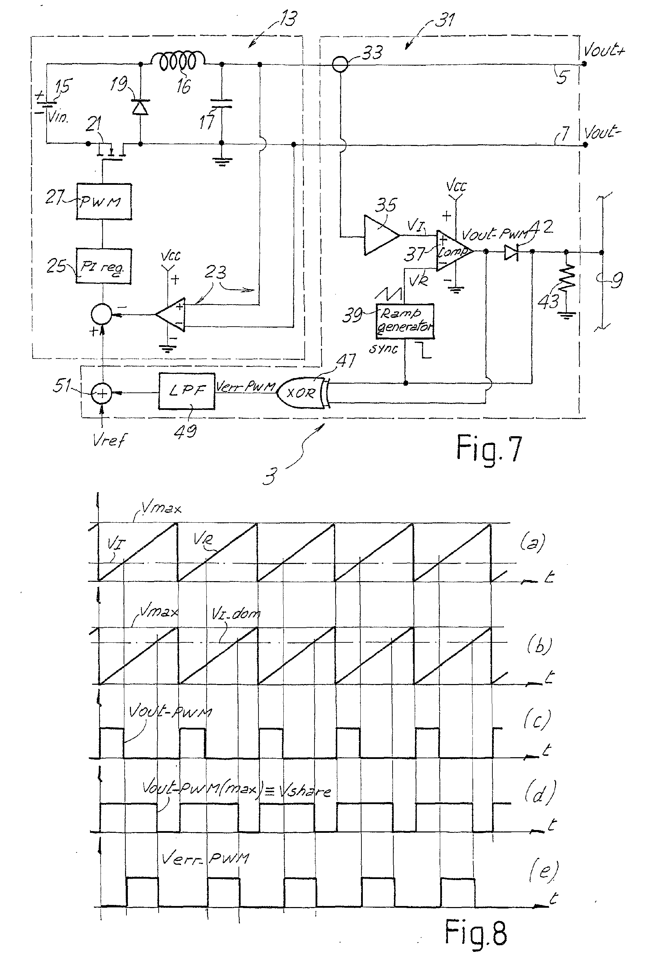

Fig. 7 shows an embodiment that is modified with respect the diagram of Fig. 2. Parts that are the same or that correspond are designated with the same reference numbers. In this example of embodiment, each supply module is connected to the share bus 9 by means of a diode 42, instead of by a transistor 41. The signal on the share bus is therefore represented by the output signal of the comparator 37 of the dominant supply module, which is not inverted, in contrast with the solution of Fig. 2. Fig. 8(a) presents the waveform of the ramp signal V_{R} and the output voltage Vₗ of the amplifier 35, which is proportional to the current delivered by the non-dominant supply module. Presented in Fig. 8(b) are the same waveforms for the dominant supply module, where V_{I-dom} is the output signal of the amplifier 35 of the dominant supply module. Figs. 8(c) and 8(d) represent the signals V_{out_PWM} and V_{out_PWM(max)}, which are the output signals from the comparator 37 of the non-dominant module and of the dominant module, respectively. On account of the type of connection between the various supply modules and the share bus 9 through the diode 42, the digital share signal Vₛₕₐᵣₑ coincides with the signal V_{out_PWM(max)}, and consequently the diagram of Fig. 8(d) also represents the digital PWM share signal Vₛₕₐᵣₑ.

For each supply module, the circuit moreover comprises an exclusive OR logic gate, on the inputs of which are present the digital share signal (V_{out_PWM(max)} = Vₛₕₐᵣₑ) and the digital PWM signal V_{out_PWM} of the module itself. Since the truth table of this logic gate is given by

| **A** | **B** | **Y** |
|---|---|---|
| 0 | 0 | 0 |
| 0 | 1 | 1 |
| 1 | 0 | 1 |
| 1 | 1 | 0 |

its output is represented by the signal of Fig. 8(e), which, in this case, constitutes the error signal V_{err_PWM}. This signal will have a duration that is the longer, the greater is the difference between the signal V_{out_PWM} and the share signal Vₛₕₐᵣₑ = V_{out_PWM(max)}. This signal is sent to a low-pass filter 49, and then to the adder 51 to be used as described with reference to the diagram of Fig. 2.

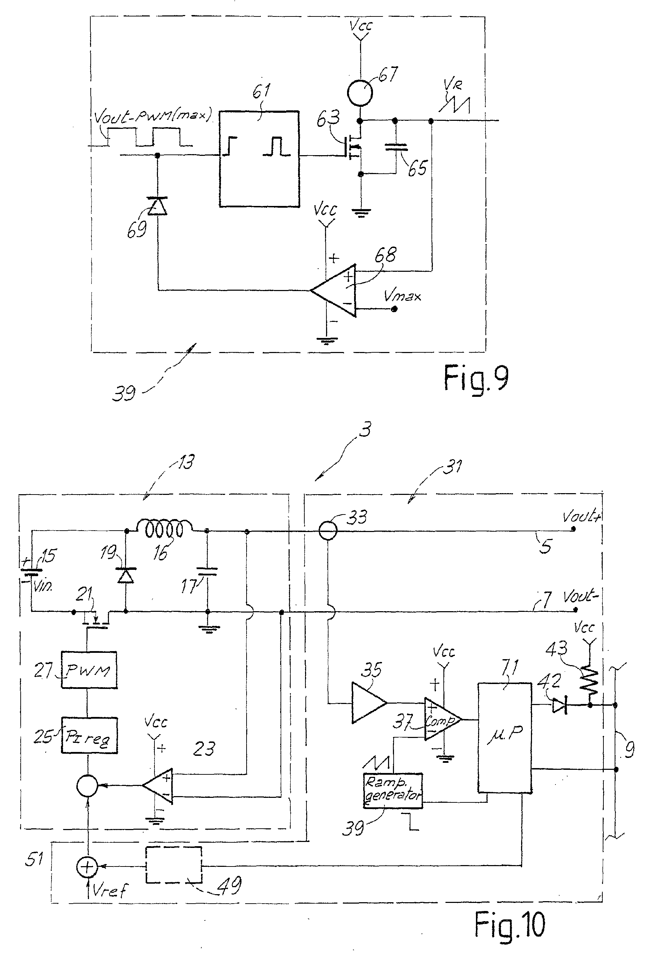

Fig. 9 presents the circuit diagram of the ramp generator in this case. Reference numbers that are the same designate parts that are the same as or correspond to the parts of the circuit illustrated in Fig. 3. The circuit of Fig. 9 is basically the same as the circuit shown in Fig. 3, except for the different connection of the inputs to the comparator 68, which are inverted with respect to the previous case, except for the different connection of the output of the comparator 68 to the trigger input of the monostable multivibrator 61, and except for the fact that the latter is activated by the leading edge, instead of by the trailing edge, of the share signal.

Fig. 10 illustrates a different embodiment of the circuit according to the invention, in which reference numbers that are the same designate parts that are the same as or correspond to the parts of the previous embodiments. In this case, as in the examples of Figs. 5 and 6, a part of the functions is performed by means of a microprocessor, which is again designated by 71. In particular, the microprocessor 71 receives at input the digital pulse-width modulation signal coming from the comparator 37 and, as regards the microprocessor of the dominant module, sends the digital share signal on the share bus 9. Each microprocessor receives, then, at input the digital share signal and synchronizes the ramp generator 39. In addition, each microprocessor generates directly the error signal or a digital pulse-width modulation signal, which is then passed through a low-pass filter 49.

It is understood that the drawing only illustrates a practical embodiment of the invention, which may vary in its embodiments and arrangements without thereby departing from the scope of the underlying idea. The possible presence of reference numbers in the attached claims has the sole purpose of facilitating reading thereof in the light of the foregoing description and of the annexed drawings, and in no way limits the sphere of protection defined in the claims.

## Claims

1. A circuit for balancing load currents delivered by a plurality of current-supply modules to a common load, in which: each power-supply module is equipped with a driving circuit for controlling the current delivered by said module; said supply modules are connected together by a share bus on which a signal is present for balancing the current delivered by each supply module, in such a way as to control and reduce the difference between the current delivered by a dominant supply module in said circuit and the current delivered by the remaining supply modules of the circuit; **characterized in that**:
• associated to each supply module are means for generating a digital pulse-width modulated signal (PWM signal), the pulse duration of which is proportional to the current delivered by the respective supply module;
• each supply module is connected to the share bus in such a way that there is present on said share bus a digital share signal, which is a function of the digital pulse-width modulation signal generated by the dominant supply module; and
• in each supply module, means are provided for generation of an error signal, the said means generating, on the basis of the pulse-width modulation signal of the module itself and of the share signal, an error signal, said error signal constituting a feedback signal for the driving circuit of the supply module.

2. The circuit according to Claim 1, **characterized in that** the digital pulse-width modulation signals of the supply modules are synchronized with one another.

3. The circuit according to Claim 2, **characterized in that** said means for generating a digital pulse-width modulation signal comprise a ramp generator, and **in that** the ramp generators of said supply modules are synchronized with one another.

4. The circuit according to Claim 2 or Claim 3, **characterized in that** the digital pulse-width modulation signals of said supply modules are synchronized together by means of the digital share signal.

5. The circuit according to one or more of the foregoing claims, **characterized in that**:
• associated to each supply module is a ramp generator, the output of which is applied to an input of a respective comparator, there being applied to the second input of the comparator an analog signal that is proportional to the current delivered by the supply module;
• each comparator associated to each supply module generates said digital pulse-width modulation signal, which is a function of the current delivered by the respective supplied module;
• the outputs of the comparators are connected, directly or indirectly, to said share bus in such a way that there is present, on the share bus, a signal that is a function of the output of the comparator of the dominant module.

6. The circuit according to at least Claim 4, **characterized in that** each ramp generator comprises a monostable multivibrator activated by an edge of the digital share signal.

7. The circuit according to Claim 6, **characterized in that** the ramp generator comprises a circuit containing a capacitive element, and **in that** the output pulse of the monostable multivibrator is applied to said circuit containing the capacitive element, which is charged by a current source, said pulse causing discharging of the capacitive element, the difference in voltage between the plates of said capacitive element constituting said ramp.

8. The circuit according to Claim 7, **characterized in that** the difference in voltage between the plates of the capacitive element is applied to a first input of a comparator, on the second input of which there is present a maximum reference voltage, the output of the comparator being connected to the input of the monostable multivibrator for generating a trigger signal at input to said monostable multivibrator if the voltage difference between the plates of the capacitive element reaches the maximum reference voltage before said edge of the share signal that causes activation of the monostable multivibrator arrives on said share bus.

9. The circuit according to one or more of Claims 1 to 8, **characterized in that** each supply module comprises a microprocessor.

10. The circuit according to Claim 9, **characterized in that** the microprocessor generates said error signal according to the share signal and to the digital pulse-width modulation signal of the supply module to which it belongs.

11. The circuit according to Claim 9 or Claim 10, **characterized in that** said microprocessor generates said digital pulse-width modulation signal of the supply module to which it belongs.

12. The circuit according to one or more of the foregoing claims, **characterized in that** each supply module comprises a logic gate to the inputs of which the digital pulse-width modulation signal generated by said supply module and the digital share signal are applied, and **in that** the output of said logic gate is applied to a low-pass filter for generating said error signal.

13. The circuit according to one or more of the foregoing claims, **characterized in that** each of said supply modules is connected to the share bus by means of a transistor.

14. The circuit according to Claim 13, **characterized in that** the digital pulse-width modulation signals of the supply modules are synchronized with one another by means of the trailing edge of the digital share signal.

15. The circuit according to one or more of Claims 1 to 13, **characterized in that** each of said supply modules is connected to the share bus via a diode.

16. The circuit according to Claim 15, **characterized in that** the digital pulse-width modulation signals of the supply modules are synchronized with one another by means of the leading edge of the digital share signal.

17. A method for controlling the current delivered by a plurality of supply modules which are connected to a common load and each of which is connected to a driving circuit for controlling the current delivered by said module, in which on a share bus that joins said supply modules a signal is applied that is proportional to the current delivered by a dominant supply module, said signal on the share bus being used by each supply module for correcting the current that it delivers; **characterized by**:
• generating, for each supply module, a digital pulse-width modulation signal (PWM signal) that is a function of the current delivered by the respective supply module;
• applying, on the share bus, a digital pulse-width modulation share signal which is a function of the digital pulse-width modulation signal of the dominant supply module;
• for each supply module, comparing the digital share signal with the digital pulse-width modulation signal generated by said supply module; and
• for each supply module, generating an error signal that is a function of the digital share signal and of the digital pulse-width modulation signal generated by said supply module, said error signal constituting a feedback signal for the driving circuit of the respective supply module.

18. The method according to Claim 17, **characterized in that** the digital pulse-width modulation signals of the various supply modules are synchronized with one another.

19. The method according to Claim 18, **characterized by** synchronising with one another the digital pulse-width modulation signals of the various supply modules by means of the share signal.

20. The method according to one or more of Claims 17 to 19, **characterized in that**:
• for each supply module an analog signal is generated that is proportional to the current delivered by said supply module; and
• the analog signal proportional to the current delivered by each supply module is compared with a ramp, for generating said digital pulse-width modulation signal.

21. The method according to Claim 20, **characterized in that** the ramps of each supply module are synchronized together by means of the digital share signal.

22. The method according to one or more of Claims 17 to 20, **characterized in that**, for each supply module, the respective digital pulse-width modulation signal and the digital share signal are applied to the input of a logic gate, and **in that** the output signal of said logic gate is filtered by a low-pass filter for generating said error signal.
